# FASCICULE DE BREVET EUROPEEN

(11) **EP 1 425 530 B1**
(45) Date de publication et mention de la délivrance du brevet: **06.04.2005**
(21) Numéro de dépôt: 02735514.8
(22) Date de dépôt: 29.04.2002
(51) Int. Cl.: F16L 3/137, F16L 3/04

(54) **DISPOSITIF D'ATTACHE ET DE FIXATION POUR CANALISATIONS ET OUTIL A MAIN PERMETTANT SA POSE**
BEFESTIGUNGS- UND VERBINDUNGSVORRICHTUNG FÜR ROHRLEITUNGEN UND HANDWERKZEUG ZUR DURCHFÜHRUNG DES VERFAHRENS
DEVICE FOR FASTENING AND FIXING CONDUITS AND HAND TOOL FOR INSTALLING SAME

(30) Priorité: 22.05.2001 FR 0107002; 12.10.2001 FR 0113402
(43) Date de publication de la demande: 09.06.2004
(73) Titulaire: SARL François Inglese, 43000 Le Puy en Velay (FR)
(72) Inventeur: INGLESE, François, F-43000 Polignac (FR)
(74) Mandataire: Dupuis, François
(86) Numéro de dépôt international: PCT/FR2002/001475
(87) Numéro de publication internationale: WO 2002/095279

(56) Documents cités:
- EP-A- 0 713 040
- EP-A- 0 842 742
- FR-A- 2 515 776
- US-A- 2 884 214

## Description

L'invention se rattache au secteur technique des colliers et dispositifs d'attache pour des canalisations, réalisés en matière plastique du type comportant une partie collier se prolongeant par une cheville d'emmanchement susceptible de pénétrer dans une paroi de fixation, cet ensemble étant monobloc, obtenu par moulage.

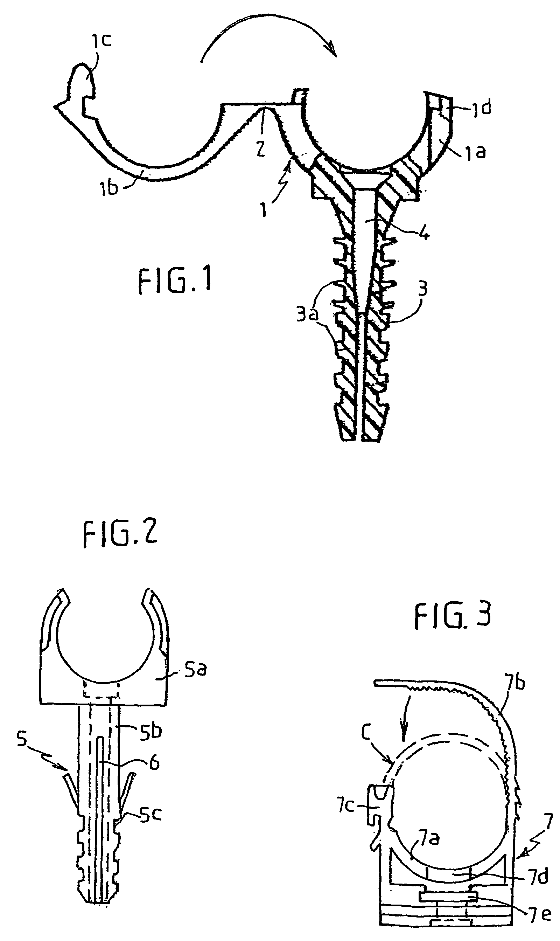

Selon l'art antérieur représenté aux figures 1, 2 et 3, on a illustré, non limitativement, trois exemples de dispositifs de fixation de canalisation. Selon la figure 1, le dispositif de fixation (1) représenté est décrit dans le brevet français n° 2.515.776 et comprend un étrier inférieur (1a) susceptible de recevoir un étrier supérieur (1b) à articulation avec possibilité d'ouverture par le biais d'un dispositif à charnière (2) obtenu par un amincissement sur la matière sur l'un de ses côtés. L'étrier supérieur comporte, sur son côté libre, un crochet (1c) venu par moulage qui, lorsque l'on referme les deux parties du collier, vient s'encliqueter dans une partie antagoniste femelle (1d) que comporte l'extrémité libre de l'étrier inférieur, les deux extrémités du collier se trouvant ainsi reliées ensemble par l'action mécanique résultant de leur forme. L'étrier inférieur est prolongé par une cheville (3) solidaire de ce dernier par moulage qui est munie de nervures (3a) en forme de disques minces qui font saillie vers l'extérieur. Cette cheville est perforée dans toute sa longueur pour permettre l'insertion d'une vis (4) qui, après mise en place, provoque l'expansion radiale des parois constitutives de la cheville afin d'assurer un ancrage dans le trou de réception formé dans la paroi du mur.

Cette mise en oeuvre du collier ainsi considérée nécessite diverses opérations de perforation du trou, de positionnement du collier par le biais de sa cheville d'ancrage puis l'introduction de la vis qui permet l'écartement radial des parois de la cheville pour s'ancrer dans la paroi du mur correspondant. Cela nécessite donc pour l'opérateur d'avoir différents composants à portée de main et d'utilisation, et ce dans des conditions de diamètre approprié.

En outre, l'insertion du collier, par le biais de sa cheville d'ancrage, est susceptible d'être effectuée à l'aide d'une frappe dans la partie interne de l'étrier inférieur, ce qui peut provoquer la déformation ou la détérioration de la zone d'entrée de la vis de fixation.

On connaît également, selon l'art antérieur représenté figure 2, un collier d'ancrage (5) qui comprend un corps (Sa) prolongé à sa base par une cheville d'ancrage (5b) perforée permettant l'introduction d'une vis (6) de liaison et d'écartement des parois (5c) de ladite cheville. Le corps se prolonge vers le haut par deux bordures sensiblement curvilignes mais laissant un espace entre elles et jouant la fonction de clip pour permettre l'insertion d'une canalisation et sa retenue.

Dans cette mise en oeuvre également, cela suggère une intervention séparée par le positionnement de la cheville dans le trou, puis l'introduction de la vis de réglage et d'ancrage. Un autre inconvénient réside dans le fait que les conduits peuvent se dégager en cas de manipulations ou de chocs inopinés.

On connaît aussi un dispositif de fixation de canalisations décrit dans le brevet français n° 2.528.527 dans lequel un corps est agencé avec une ouverture longitudinale dans sa longueur permettant l'introduction d'une vis d'écartement et de réglage d'une cheville d'ancrage, le corps se prolongeant extérieurement avec une forme en collier présentant un brin libre cranté susceptible de s'engager, après son contoumement du conduit ou canalisation, dans un élément de liaison et de retenue formé à l'opposé sur le corps.

On a aussi représenté, en variante figure 3, un dispositif (7) du même type. On retrouve la notion d'un collier (7a) avec une forme en berceau recevant un conduit (C) à insérer, un brin ou languette (7b) cranté qui est susceptible d'entourer ledit conduit et de venir s'ancrer dans un dispositif de fermeture (7c) formé sur le collier. La partie basse de ce dernier est agencée avec des ouvertures (7d) et logements (7e) permettant l'insertion de la vis d'ancrage.

On connaît aussi par le brevet US 2884214 un dispositif de maintien de tubes présentant un corps et une languette crantée, celle-ci étant susceptible de s'engager dans une ouverture ménagée dans ledit corps. Cependant, sa mise en place est peu pratique et son enlèvement impossible.

L'art antérieur considéré qui est exploité à la connaissance du demandeur fait l'objet d'un certain nombre d'inconvénients dans la mesure où il exige différentes opérations successives d'intervention rappelées précédemment.

Le but recherché selon l'invention était de fournir à l'utilisateur un nouveau concept de dispositif de fixation qui soit de manipulation simple qui supprime le nombre d'interventions en vue de la pose et la fixation du conduit et canalisation.

Un autre but recherché selon l'invention était la conception d'un dispositif de fixation et d'attache qui aurait la qualité de verrouillage en position tel qu'il empêche le glissement du conduit enserré grâce à un serrage ferme en position.

Un autre but recherché selon l'invention était de prévoir un nouveau dispositif qui puisse être démontable une fois fixé pour permettre toutes opérations sur le chantier et interventions, en vue par exemple du changement des canalisations.

Un autre but recherché selon l'invention était de concevoir un outil à main permettant la mise en place et pose de l'attache, mais aussi son ouverture pour le dégagement de la canalisation.

Ces buts et d'autres encore ressortiront bien de la suite de la description.

Selon une première caractéristique de l'invention, le dispositif d'attache et de fixation pour canalisations du type comportant une partie collier se prolongeant par un moyen d'emmanchement susceptible de pénétrer dans une paroi de fixation, l'ensemble étant monobloc par moulage, comprend un corps de base (10a) dont la partie supérieure est agencée pour constituer un berceau d'appui et de positionnement du conduit de canalisation réceptionné en constituant simultanément une zone de frappe. Le corps de base présente, dans son prolongement inférieur, une cheville pleine non perforée, agencée sur sa périphérie avec une pluralités de disques circulaires formant lèvres. L'un des chants latéraux du corps de base reçoit, par le biais d'une sur-épaisseur de matière, une languette flexible destinée à entourer le conduit ou canalisation L'extrémité libre de cette languette présente des crans qui sont susceptibles de venir s'ajuster et coopérer avec des crans complémentaires formés sur l'autre chant latéral du corps de base. La disposition desdits crans assure une fonction de blocage latéral de ladite languette qui ne peut s'écarter dans un sens ou dans un autre de part la disposition avantageuse des parties de crans précitées et la conformation de zones de butée établie sur les extrémités latérales desdits crans. L'extrémité apparente de la languette présente, sensiblement dans un plan au dessus de sa partie d'extrémité intérieure crantée, une lèvre complémentaire établie sur tout ou partie de sa largeur et ouverte vers le haut. Cette lèvre définit une cavité intérieure pour la réception d'un outil tel que tournevis, permettant en effet, par contre basculement du tournevis, l'ouverture de la forme en collier par le dégagement de l'extrémité libre de la languette par rapport à la zone crantée du corps de base.

Selon une autre caractéristique, cet outil comprend un corps formant manche, dont l'extrémité inférieure présente une zone susceptible de chevaucher la base du dispositif d'attache et de se centrer sous la forme en berceau de la base pour assurer sa tenue, ledit corps étant aménagé avec une ouverture pour le passage de la languette flexible, et en ce que l'extrémité opposée supérieure de l'outil présente une aire de frappe et une patte déportée et perpendiculaire audit manche avec à son extrémité une griffe pour s'adapter et entourer la lèvre formée extérieurement sur la languette et coopérer avec celle-ci lors des opérations de fermeture et d'ouverture de l'attache.

Ces caractéristiques et d'autres encore ressortiront bien de la suite de la description.

Pour fixer l'objet de l'invention illustrée d'une manière non limitative aux figures des dessins où :
- Les figures 1, 2 et 3 sont des vues des colliers d'attache et de fixation de canalisations, selon l'art antérieur,

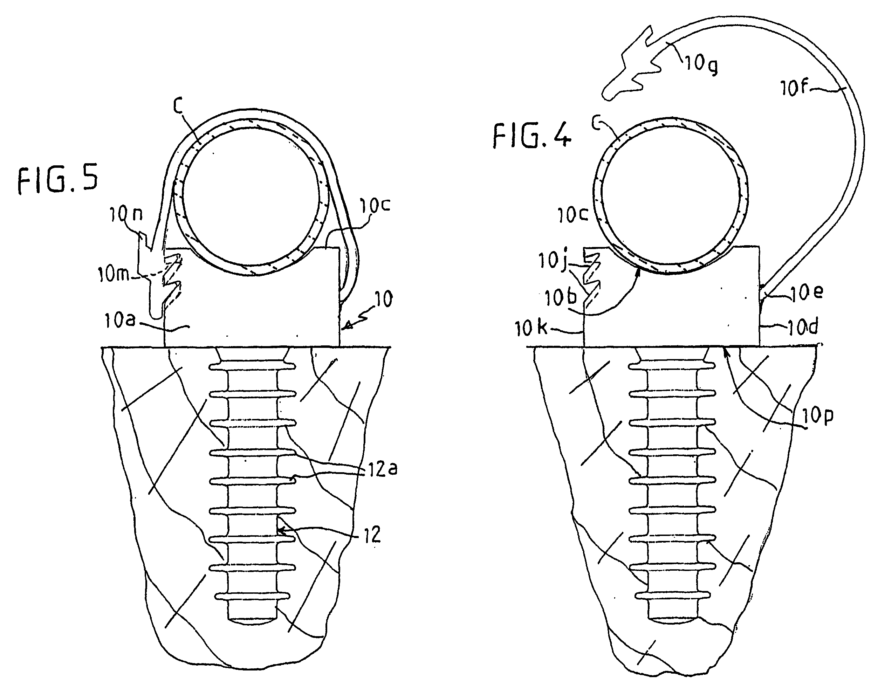

- La figure 4 est une vue d'un dispositif d'attache et de fixation, selon l'invention, avant enserrage d'un conduit ou canalisation,

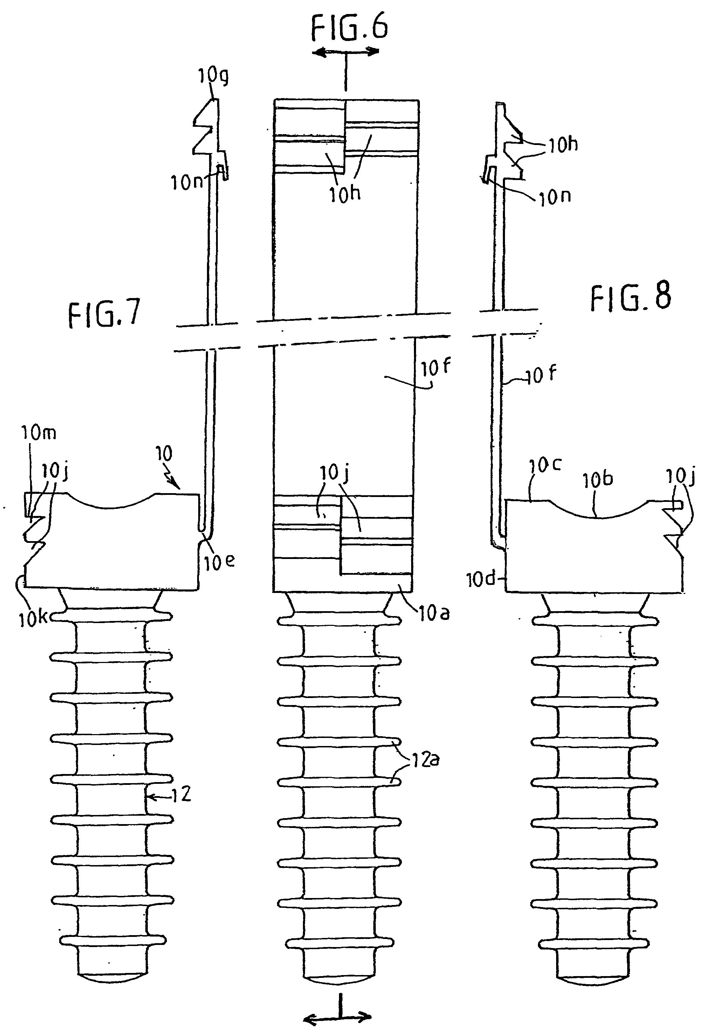

- La figure 5 est une vue similaire à la figure 4 après enserrage du conduit ou canalisation,
- La figure 6 est une vue du dispositif d'attache et de fixation en position relevée de son moyen d' enserrage du conduit,
- Les figures 7 et 8 sont des vues par rapport à la figure 6, vue de droite, vue de gauche du dispositif selon l'invention,
- La figure 9 est une vue à caractère schématique illustrant le dispositif de fixation et d'attache, selon l'invention, dans une application donnée.
- Les figures 10 et 11 sont des vues de face du dispositif d'attache selon une première variante de réalisation au niveau des crans du corps de base.
- La figure 12 est une vue de côté montrant la languette libre selon une variante de réalisation.
- La figure 13 est une vue semblable à la figure 12 montrant la languette enserrant une canalisation.
- La figure 14 est une vue en perspective de l'outil permettant la pose et la fixation de la cheville selon l'invention.
- La figure 15 est une vue de profil et en coupe selon la ligne 15-15 de la figure 14.
- La figure 16 est une vue en coupe selon la ligne 16-16 de la figure 15.
- La figure 17 est une vue illustrant le positionnement de l'outil sur la cheville en vue de son positionnement.
- La figure 18 est une vue suivant la figure 17 illustrant la mise en place de la cheville dans son logement par un complément d'effet de frappe.
- La figure 19 est une vue partielle suivant la phase opératoire de la figure 18, consistant dans le verrouillage en position de la languette de l'attache autour de la canalisation.
- La figure 20 est une vue complémentaire à la figure 19 dans laquelle l'opérateur procède à l'ouverture de l'attache pour avoir accès à la canalisation.

Afin de rendre plus concret l'objet de l'invention, on le décrit maintenant d'une manière non limitative illustrée aux figures des dessins.

Le dispositif de fixation, selon l'invention, est référencé dans son ensemble par (10). Il est remarquable en ce qu'il est réalisé en une seule pièce monobloc dans un moulage en incluant, en combinaison, un corps de base (10a) dont la partie supérieure est agencée pour constituer un berceau (10b) d'appui et de positionnement du conduit (C) de canalisation réceptionné en constituant simultanément une zone de frappe pour permettre son enfoncement, ainsi qu'il sera vu par la suite. Le corps de base (10a) présente, dans son prolongement inférieur, une cheville (12) pleine non perforée agencée sur sa périphérie avec une pluralités de disques (12a) circulaires formant lèvres susceptibles d'une légère déformation en extrémité lors de l'ancrage dans le trou de réception. Ledit corps de base (10a) présente, dans sa partie supérieure, de part et d'autre de la zone en berceau (10b), deux parties horizontales (10c) qui peuvent également constituer la partie de frappe pour permettre l'enfoncement de l'ensemble dans le trou récepteur.

L'un des chants latéraux (10d) du corps de base reçoit, par le biais d'une sur-épaisseur de matière (10e), une languette (10f) flexible destinée à entourer le conduit ou canalisation (C). L'extrémité libre (10g) de cette languette présente, de manière avantageuse, des crans (10h) qui sont susceptibles de venir s'ajuster et coopérer avec des crans complémentaires (10j) formés sur l'autre chant latéral (10k) du corps de base.

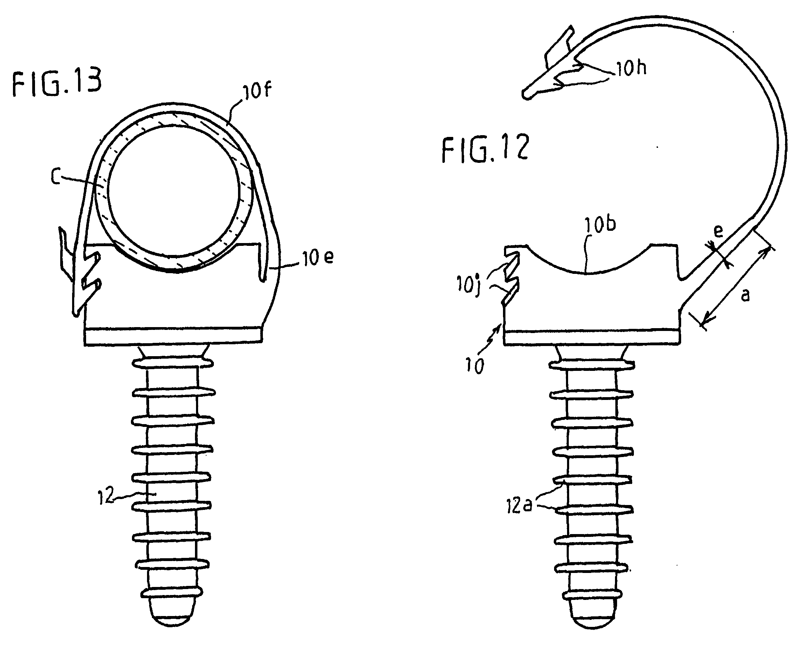

A noter que la languette (10f) présente une zone (a) d'épaisseur (e) plus importante au niveau de son raccordement avec le corps (10a) de la base, comme on le voit aux figures 12 et 13, évitant ainsi tout risque de cassure lors des manipulations.

Dans une mise en oeuvre préférentielle, les zones crantées formées sur l'extrémité libre de la languette et sur le chant latéral du corps de base, sont établies d'une manière spécifique. En effet, les crans sont disposés sur la moitié de la largeur de ladite extrémité libre de la languette et dudit chant latéral de sorte à obtenir, sur un même plan, une zone en saillie formée par la partie cran et une zone libre. De manière complémentaire, les zones de cran disposées sur l'extrémité libre de la languette et sur le chant latéral du corps de base, sont disposées par demi parties avec un décalage d'une épaisseur de cran permettant ainsi d'obtenir un positionnement en quinconce des parties de cran complémentaires à un positionnement en quinconce des zones sans cran. La mise en oeuvre réalisée sur la languette et sur le chant latéral précité est telle qu'il y a une complémentarité, ce qui permet d'obtenir un positionnement ferme et stable de l'ensemble. On supprime ainsi tout débattement latéral de la languette en cas de sollicitation inopinée sur le conduit ou canalisation. Il y a donc ainsi un blocage latéral de ladite languette qui ne peut s'écarter dans un sens ou dans un autre de part la disposition avantageuse des parties de crans précitées et la conformation de zones de butée (10m) établie sur les extrémités latérales desdits crans.

Cette disposition en quinconce et en alternance de creux et saillies constituant les parties mâles et femelles d'emboîtement permettant d'utiliser la languette dans une configuration en crochet est particulièrement avantageuse dans la tenue et la rigidité de l'ensemble de fixation.

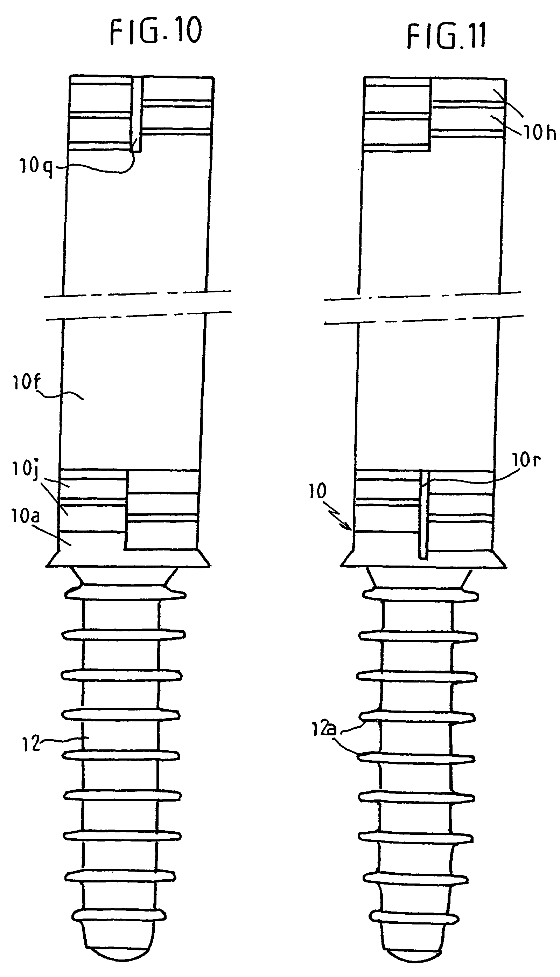

Pour renforcer la tenue et la rigidité de cette fixation, il est également prévu, comme illustré aux figures 10 et 11, de former soit entre les crans décalés (10h) de la languette, soit entre les crans (10j) du corps, une rainure (10q) ou (10r).

Selon une disposition complémentaire et avantageuse, l'extrémité apparente de la languette présente, sensiblement dans un plan au dessus de sa partie d'extrémité intérieure crantée, une lèvre (10n) complémentaire établie sur tout ou partie de sa largeur et ouverte vers le haut. Cette lèvre définit une cavité intérieure pour la réception d'un outil tel que tournevis, permettant en effet, par contre basculement du tournevis, l'ouverture de la forme en collier par le dégagement de l'extrémité libre de la languette par rapport à la zone crantée du corps de base.

Ainsi, et selon l'invention, le corps de base présente un plan inférieur (10p) rectangulaire ou similaire, dont la largeur est sensiblement supérieure au diamètre de la cheville sous-jacente de manière à constituer une zone d'appui et de stabilité du dispositif de fixation évitant tout basculement de ce dernier.

Ce dispositif, selon l'invention, est donc particulièrement avantageux par sa conception. Il supprime tout d'abord toute nécessité à l'usage de tige ou vis rapportée permettant l'ancrage de forme en cheville telle que rappelé précédemment, selon l'art antérieur.

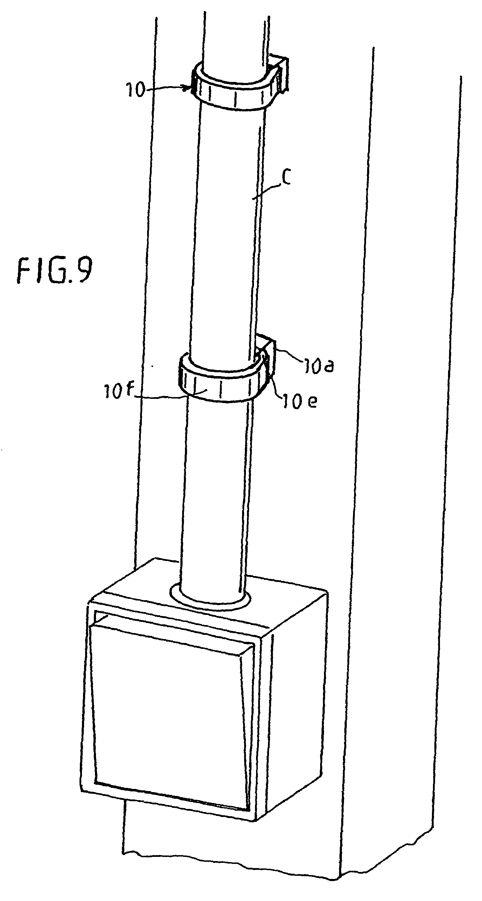

En pratique, et dans l'exemple représenté figure 9 des dessins, il suffit à l'opérateur par rapport à un problème de raccordement précis, d'établir ses avant-trous dans la paroi à percer et réceptrice des dispositifs puis à introduire la partie cheville par emmanchement et frappe sur le berceau ou les plans d'appui (10c) desdits dispositifs, la frappe s'effectuant sans détérioration dans le fond du berceau ou sur les parois horizontales disposées de part et d'autre de ce dernier. Une fois positionné dans les trous, l'opérateur doit simplement positionner les conduits ou canalisation puis fermer ensuite la languette par simple action manuelle. L'enlèvement du conduit ou canalisation peut s'effectuer sans difficulté en ouvrant les languettes après positionnement du tournevis dans la lèvre et zone de réception correspondant provoquant l'écartement de la languette par son extrémité et libérant ainsi les crans du corps de base.

Selon une autre disposition illustrée aux figures 10 à 13, la cheville (12) présente une extrémité conique (12b) pour faciliter l'introduction dans le trou de réception.

Selon l'invention, le dispositif monobloc obtenu est multi-fonctions. Il suffit à l'opérateur et poseur d'avoir un seul jeu de dispositif de fixation et d'attache tel que mentionné. Il n'utilise plus, dans sa manipulation, des pièces et accessoires tels que vis, tiges d'ancrage et chevilles creuses.

Par ce dispositif, un autre avantage réside dans le décalage du conduit par rapport au plan du mur ou paroi.

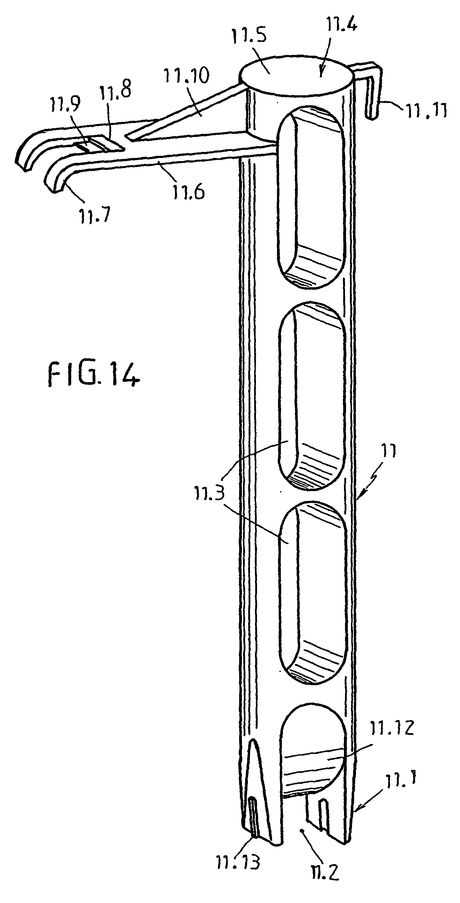

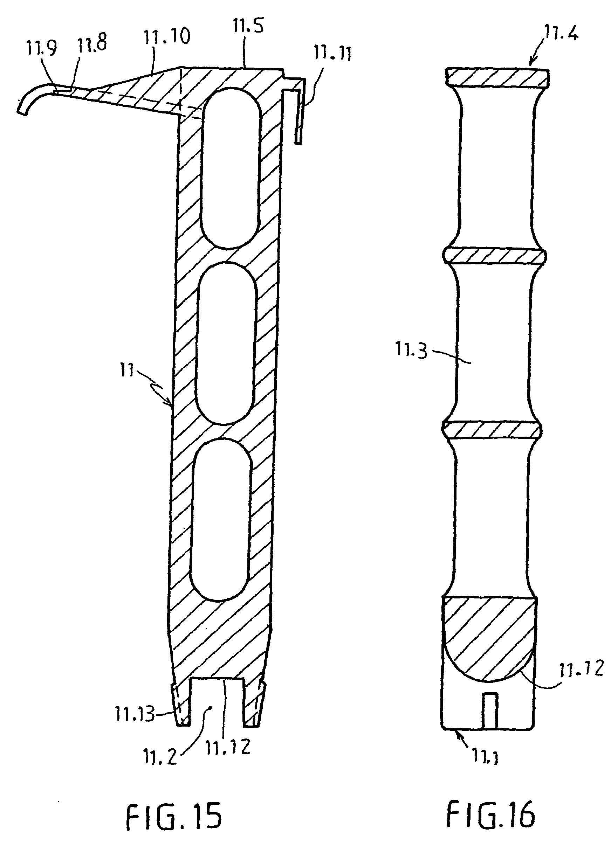

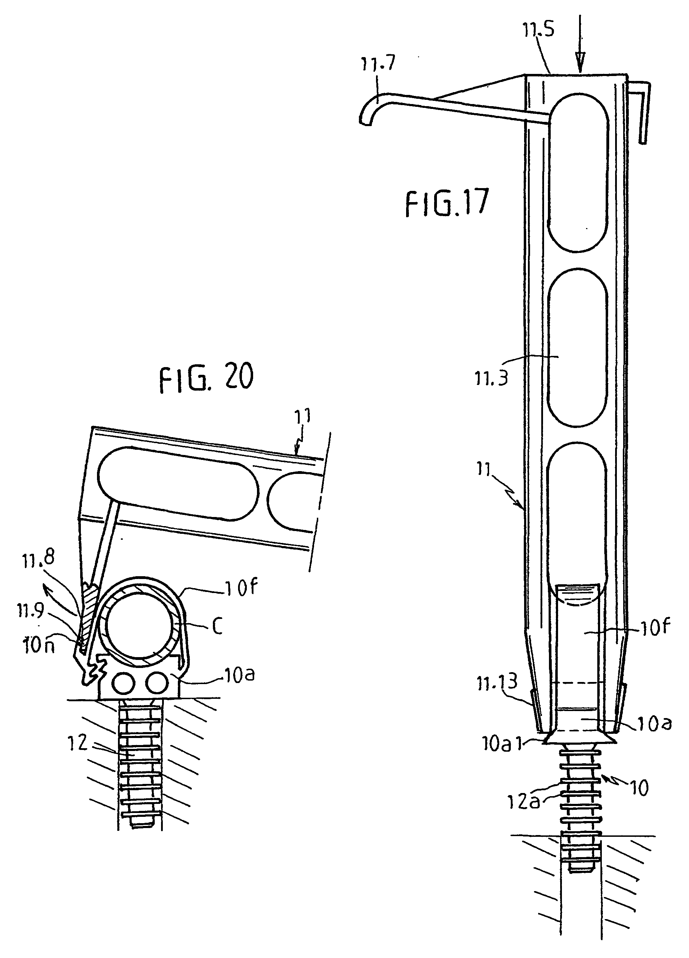

A titre complémentaire et selon l'invention, celle-ci vise un outil à main spécifique apte à permettre la pose et la fixation de la cheville dans la paroi ou mur récepteur, mais aussi son déverrouillage et ouverture pour permettre l'accès à la canalisation et son entretien ou réparation éventuel. L'outil est ainsi illustré aux figures 14 à 20 avec représentation de son mode d'utilisation.

Ainsi dans le but de faciliter la fixation du dispositif d'attache précité, sa fermeture autour de différents types de canalisations pouvant être d'accès aisés ou non, le demandeur a conçu un nouvel outil à main susceptible de faciliter la mise en place et positionnement du dispositif d'attache, sa fermeture autour du conduit ou canalisation considérée et/ou son ouverture pour permettre l'accès à ladite canalisation ou conduit.

L'outil à main comprend un corps (11), formant manche, tubulaire dont l'extrémité inférieure (11.1) présente une zone (11.2) susceptible de chevaucher la base (10a) du dispositif d'attache et de fixation de canalisation, de se centrer par rapport à ce dernier pour assurer sa tenue. Le manche est aménagé avec au moins une ouverture (11.3) pour autoriser le passage et guidage de la languette flexible (10f) dudit dispositif. L'extrémité opposée supérieure (11.4) de l'outil présente une aire de frappe (11.5) destinée à permettre l'action d'un burin ou marteau pour l'enfoncement du dispositif d'attache précité. Le manche dans sa partie supérieure présente une patte (11.6) déportée et perpendiculaire audit manche, agencée à son extrémité en forme de griffe (11.7) pour pouvoir s'adapter et entourer la lèvre (10n) formée extérieurement sur la languette (10f), et coopérant avec celle-ci lors des opérations de fermeture ou d'ouverture de l'attache.

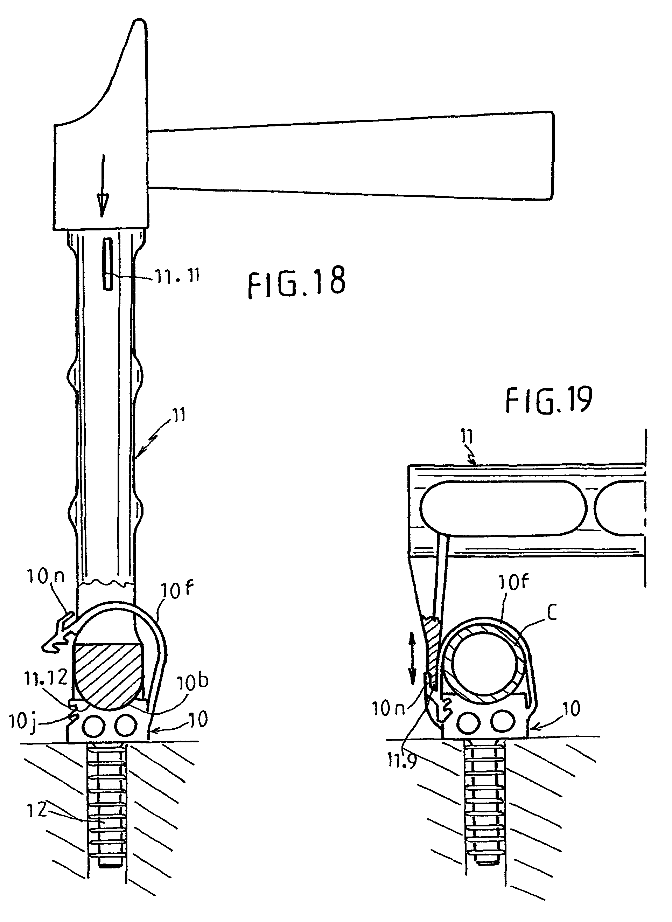

Par ailleurs, la partie de fond (11.8) de la griffe (11.7) présente dans l'épaisseur de la patte (11.6) une saillie (11.9) de faible épaisseur et transversale qui sera susceptible de venir se positionner dans l'espace établi de la languette flexible (10f) par rapport à la base de l'attache (figure 19). La largeur entre les griffes (11.7) correspond à la largeur de la languette. Ladite saillie (11.9) peut présenter sur sa face apparente un plan incliné ; ladite griffe (11.7) est ainsi susceptible d'entourer ladite languette et de permettre par l'action d'appui manuel sur l'extrémité supérieure de l'outil et basculement, la fixation de la languette sur la partie crantée du dispositif formée sur le corps de base de celui-ci, ladite languette pouvant être également écartée par la griffe précitée pour assurer son enlèvement.

A titre complémentaire, l'outil peut comprendre une nervure de rigidification (11.10) sur la partie supérieure de la patte aboutissant vers l'aire de frappe. A l'opposé, peut être envisagé un crochet (11.11) permettant sa fixation à une poche de vêtement et sa suspension.

La partie inférieure (11.1) présente une forme en chape susceptible de s'engager autour de la base de l'attache et se positionner sur les parties pentées (10a1) de celle-ci. En outre, le fond (11-12) de la chape présente une forme curviligne complémentaire à celle du berceau de l'attache, réceptrice de la canalisation pour assurer par un emboitement complémentaire un parfait appui et une transmission de l'effet de frappe par l'opérateur sur l'outil et donc l'enfoncement de l'attache.

En outre, l'une des faces apparente de la partie d'extrémité inférieure peut présenter un repère vertical (11.13) de centrage.

Ainsi l'outil selon l'invention est particulièrement apte à permettre l'enfoncement de l'attache par la paroi réceptrice, le verrouillage de la canalisation par encliquetage de la languette et aussi le déverrouillage de celle-ci (figure20) doit permettre un nouvel accès à la canalisation..

Selon l'invention, l'attache et son outil de pose sont particulièrement avantageux d'utilisation pour un opérateur. Tout particulièrement dans les endroits difficiles d'accès ou de pose, l'outil constitue un moyen pratique pour faciliter la pose de l'attache et l'ouverture./fermeture de la languette.

## Revendications

1. Dispositif d'attache et de fixation pour canalisations du type comportant une partie collier se prolongeant par un moyen d'emmanchement susceptible de pénétrer dans une paroi de fixation, l'ensemble étant monobloc par moulage,
**caractérisé en ce qu'**il comprend un corps de base (10a) dont la partie supérieure est agencée pour constituer un berceau (10b) d'appui et de positionnement du conduit (C) de canalisation réceptionné en constituant simultanément une zone de frappe,
et **en ce que** le corps de base (10a) présente, dans son prolongement inférieur, une cheville (12) pleine non perforée, agencée sur sa périphérie avec une pluralités de disques (12a) circulaires formant lèvres,
et ce que l'un des chants latéraux (10d) du corps de base reçoit, par le biais d'une sur-épaisseur de matière (10e), une languette (10f) flexible destinée à entourer le conduit ou canalisation (C),
et **en ce que** l'extrémité libre (10g) de cette languette présente des crans (10h) qui sont susceptibles de venir s'ajuster et coopérer avec des crans complémentaires (10j) formés sur l'autre chant latéral (10k) du corps de base,
et **en ce que** la disposition desdits crans assure une fonction de blocage latéral de ladite languette qui ne peut s'écarter dans un sens ou dans un autre de part la disposition avantageuse des parties de crans précitées et la conformation de zones de butée (10m) établies sur les extrémités latérales desdits crans,
et **en ce que** l'extrémité apparente de la languette présente, sensiblement dans un plan au dessus de sa partie d'extrémité intérieure crantée, une lèvre (10n) complémentaire établie sur tout ou partie de sa largeur et ouverte vers le haut,
et **en ce que** cette lèvre définit une cavité intérieure pour la réception d'un outil tel que tournevis, permettant en effet, par contre basculement du tournevis, l'ouverture de la forme en collier par le dégagement de l'extrémité libre de la languette par rapport à la zone crantée du corps de base.

2. Dispositif d'attache et de fixation, selon la revendication 1, **caractérisé en ce que** ledit corps de base (10a) présente, dans sa partie supérieure, de part et d'autre de la zone en berceau (10b), deux parties horizontales (10c) qui peuvent constituer la partie de frappe.

3. Dispositif d'attache et de fixation, selon la revendication 1, **caractérisé en ce que** les crans sont disposés sur la moitié de la largeur de ladite extrémité libre de la languette et dudit chant latéral de sorte à obtenir, sur un même plan, une zone en saillie formée par la partie cran et une zone libre,
et **en ce que** les zones de crans disposées sur l'extrémité libre de la languette et sur le chant latéral du corps de base, sont disposées par demi parties avec un décalage d'une épaisseur de cran permettant ainsi d'obtenir un positionnement en quinconce des parties de crans complémentaires à un positionnement en quinconce des zones sans cran.

4. Dispositif d'attache et de fixation, selon la revendication 1, **caractérisé en ce que** le corps de base présente un plan inférieur (10p) rectangulaire ou similaire, dont la largeur est sensiblement supérieure au diamètre de la cheville sous-jacente de manière à constituer une zone d'appui et de stabilité du dispositif de fixation évitant tout basculement de ce dernier.

5. Dispositif d'attache et de fixation selon la revendication 3, **caractérisé en ce que** entre les crans (10h) de la languette ou les crans (10j) du corps de base, est formée une rainure (10q) ou (10r) de renforcement de la fixation.

6. Dispositif d'attache et de fixation selon la revendication 1, **caractérisé en ce que** la languette (10f) présente, au niveau de son raccordement avec le corps de base, une épaisseur (e) plus importante sur une zone (a), évitant tout risque de cassure.

7. Outil à main permettant la pose du dispositif d'attache et de fixation selon l'une quelconque de revendications 1 à 6 **caractérisé en ce qu'**il comprend un corps (11) formant manche, dont l'extrémité inférieure (11.1) présente une zone (11.2) susceptible de chevaucher la base (10a) du dispositif d'attache et de se centrer sous la forme en berceau de la base pour assurer sa tenue, ledit corps étant aménagé avec une ouverture (11.3) pour le passage de la languette flexible (10f), et **en ce que** l'extrémité opposée supérieure (11.4) de l'outil présente une aire de frappe (11.5) et une patte (11.6) déportée et perpendiculaire audit manche avec à son extrémité une griffe (11.7) pour s'adapter et entourer la lèvre (10n) formée extérieurement sur la languette (10f) et coopérer avec celle-ci lors des opérations de fermeture et d'ouverture de l'attache.

8. Outil à main selon la revendication 7 **caractérisé en ce que** la partie de fond (11.8) de la griffe (11.7) présente dans l'épaisseur de la patte (11.6) une saillie de faible épaisseur et transversale pour se positionner dans l'espace établi de la languette flexible par rapport à la base de l'attache, la largeur entre les griffes (11.7) correspondant à la largeur de la languette.

9. Outil à main selon la revendication 7, **caractérisé en ce que** la partie inférieure (11.1) présente une forme en chape s'engageant autour de la base de l'attache en se positionnant sur les parties précitées (10a1) de celle-ci, et **en ce que** le fond (11-12) de la chape présente une forme curviligne complémentaire à celle du berceau récepteur de la canalisation.

10. Outil à main selon la revendication 7, **caractérisé en ce qu'**il comprend une nervure de rigidification (11-10) sur la partie supérieure de la patte (11.6) aboutissant vers l'aire de frappe.

11. Outil à main selon la revendication 7 **caractérisé en ce qu'**il présente dans la partie supérieure un crochet (11.11) de suspension et d'attache.

12. Outil à main selon la revendication 9 **caractérisé en ce qu'**une des faces apparentes de la partie d'extrémité inférieure présente un repère vertical (11-13) de centrage.

## Patentansprüche

1. Befestigungs- und Verbindemgsvorrichtung für Rohrleitungen der Art, welche einen Schellenteil aufweist, der sich durch eine Schaftvorrichtung verlängert, die geeignet ist, in eine Befestigungswand einzudringen, wobei die einstückige Einheit durch Giessen erhalten wurde, **dadurch gekennzeichnet, dass** sie einen Grundkörper (10a) aufweist, dessen oberer Abschnitt angeordnet ist, um eine Rohrbettung (10b) zu bilden zur Auflage und Positionierung der aufgenommenen Rohrleitung (C), indem gleichzeitig ein Aufschlagbereich gebildet wird,
- und dadurch, dass der Grundkörper (10a) in seiner unteren Verlängerung einen nicht perforierten massiven Dübel (12) bildet, wobei auf seiner Peripherie eine Mehrzahl von kreisförmigen Scheiben (12a) angeordnet sind, welche Lippen bilden,
- und dadurch, dass eine der Seitenkanten (10d) des Grundkörpers über eine Verdickung des Materials (10e) eine biegsame Lasche (10f) erhält die dazu bestimmt ist, die Leitung oder Rohrleitung (C) zu umgeben,
- und dadurch, dass das freie Ende (10g) dieser Lasche Einkerbungen (10h) aufweist, die geeignet sind, sich an komplementäre Einkerbungen (10j), die auf der anderen Seite (10k) des Gzundkörpers gebildet sind, anzupassen und mit diesen zusammenzuwirken,
- und dadurch, dass die Anordnung dieser Einkerbungen eine seitliche Blockierfunktion für die Lasche sicherstellt, die sich aufgrund der vorteilhaften Anordnung der vorgenannten Einkerbungsabschnitte und dem Aufbau der Widerlagerbereiche (10m), die an den Seitenenden der Einkerbungen gebildet sind, weder in der einen noch der anderen Richtung entfernen kann,
- und dadurch, dass das sichtbare Ende der Lasche im wesentlichen in einer Ebene oberhalb ihres mit Einkerbungen versehenen Innenendes eine komplementäre Lippe (10n) aufweist, welche auf ihrer vollständigen Breite oder einem Teil derselben gebildet ist und nach oben offen ist,
- und dadurch, dass diese Lippe eine innere Mulde abgrenzt, um ein Werkzeug wie einen Schraubendreher aufzunehmen, was ermöglicht, durch Gegenhebeln des Schraubendrehers die Schelle zu öffnen, indem das freie Ende der Lasche in Bezug auf den mit Einkerbungen versehenen Bereich des Grundkörpers ausgerastet wird.

2. Befestigungs- und Verbindungsvorrichtung gemäss Anspruch 1, **dadurch gekennzeichnet, dass** der Grundkörper (10a) in seinem oberen Abschnitt aufbeiden Seiten des Rohrbettungsbereichs (10b) zwei waagerechte Abschnitte (10e) aufweist, die den Aufschlagbereich bilden können.

3. Befestigungs- und Verbindungsvorrichtung gemäss Anspruch 1, **dadurch gekennzeichnet, dass** die Einkerbungen auf der Hälfte der Breite des freien Endes der Lasche und der Seitenkante angeordnet sind, um in einer gleichen Ebene einen vorspringenden Bereich zu erhalten, der durch den mit Einkerbungen versehenen Abschnitt und einen freien Bereich gebildet ist,
- und dadurch, dass die auf dem freien Ende der Lasche und auf der Seitenkante des Grundkörpers angeordneten mit Einkerbungen versehenen Bereiche zur Hälfte mit einem Versatz einer Dicke der Einkerbung angeordnet sind, was somit ermöglicht, eine Fünfpunktpositionierung der komplementären Einkerbungsabschnitte zu einer Fünfpunktpositionierung der Bereiche ohne Einkerbung zu erhalten.

4. Befestigungs- und Verbindungsvorrichtung gemäss Anspruch 1, **dadurch gekennzeichnet, dass** der Grundkörper eine rechteckige oder ähnlich geformte untere Ebene (10p) aufweist, deren Breite im wesentlichen größer als der Durchmesser des darunter liegenden Dübels ist, um einen Bereich der Auflage und der Stabilität der Befestigungsvorrichtung zu bilden, wodurch jedes Kippen des letztgenannten verhindert wird.

5. Befestigungs- und Verbindungsvorrichtung gemäss Anspruch 3, **dadurch gekennzeichnet, dass** zwischen den Einkerbungen (10h) der Lasche oder den Einkerbungen (10j) des Grundkörpers eine Rille (10q) oder (10r) gebildet ist, um die Befestigung zu unterstützen.

6. Befestigungs- und Verbindungsvorrichtung gemäss Anspruch 1, **dadurch gekennzeichnet, dass** die Lasche (10f) auf Höhe ihrer Verbindung mit dem Grundkörper eine Dicke (e) aufweist, die in einem Bereich (a) größer ist, wodurch jedes Risiko des Zerbrechens verhindert wird.

7. Handwerkzeug, welches das Setzen der Befestigungs- und Verbindungsvorrichtung gemäss irgend einem der Ansprüche 1 bis 6 ermöglicht, **dadurch gekennzeichnet, dass** dieses einen Körper (11) aufweist, welcher einen Griff bildet, dessen unteres Ende (11.1) einen Bereich (11.2) aufweist, der dazu geeignet ist, sich über die Basis (10a) der Verbindungsvorrichtung zu schieben und sich unter der Rohrbettung der Basis zu zentrieren, um dessen Halt sicherzustellen, wobei der Körper mit einer Öffnung (11.3) ausgestattet ist, um die biegsame Lasche (10f) durchgehen zu lassen, und dadurch, dass das gegenüberliegende obere Ende (11.4) des Werkzeugs einen Schlagbereich (11.5) und eine Klaue (11.6) aufweist, die seitlich und senkrecht zu dem Griff ist, mit einem Greifer (11.7) an ihrem Ende, um sich an die Lippe (10n), die außen an der Lasche (10f) gebildet ist, anzupassen und diese zu umgeben, und mit dieser bei Schließ- und Öffnungsvorgängen des Verbinders zusammenzuwirken.

8. Handwerkzeug gemäss Anspruch 7, **dadurch gekennzeichnet, dass** der Bodenabschnitt (11.8) des Greifers (11.7) in der Dicke der Klaue (11.6) einen Vorsprung geringer Dicke und transversal aufweist, um sich in dem Raum anzuordnen, der in der biegsamen Lasche gebildet ist in Bezug auf die Basis des Verbinders, wobei die Breite zwischen den Greifern (11.7) der Breite der Lasche entspricht.

9. Handwerkzeug gemäss Anspruch 7, **dadurch gekennzeichnet, dass** untere Abschnitt (11.1) gabelförmig ist und um die Basis des Verbinders greift, indem er sich um die vorgenannten Abschnitte (10a1) desselben positioniert, und dadurch, dass der Boden (11.12) der Gabel eine gekrümmte Form komplementär zu jener der Rohrbeüaufnahme für die Rohrleitung aufweist.

10. Handwerkzeug gemäss Anspruch 7, **dadurch gekennzeichnet, dass** es auf dem oberen Abschnitt der Klaue (11.6) eine Verstärkungsrippe (11.10) aufweist, welche gegen den Schlagbereich anstößt.

11. Handwerkzeug gemäss Anspruch 7, **dadurch gekennzeichnet, dass** es in dem oberen Abschnitt einen Haken (11.11) zum Aufhängen und Befestigen aufweist.

12. Handwerkzeug gemäss Anspruch 9, **dadurch gekennzeichnet, dass** eine der sichtbaren Seiten des Abschnitts des unteren Endes eine senkrechte Markierung (11.13) zum Zentrieren aufweist.

## Claims

1. Device for fastening and fixing pipes, of the type comprising a collar part extended by a force-fitting means that can penetrate into a fixing wall, the whole being moulded as a single piece,
**characterized in that** it comprises a base body (10a) the top of which is designed to constitute a cradle (10b) for supporting and positioning the pipe duct (C) housed, while at the same time constituting an impact region,
and **in that** the base body (10a) has, extending downwards from it, a solid, non-perforated peg (12) having on its periphery a plurality of circular discs (12a) forming lips,
and **in that** one of the side edges (10d) of the base body receives, by means of an overthickness of material (10e), a flexible tongue (10f) designed to surround the duct or pipe (C),
and **in that** the free end (10g) of this tongue has notches (10h) that can fit into and cooperate with complementary notches (10j) formed on the other side edge (10k) of the base body,
and **in that** the way the said notches are arranged makes it possible to laterally lock the said tongue, which cannot move in either direction owing to the advantageous arrangement of the abovementioned notch parts and the shape of abutment regions (10m) made on the side ends of the said notches,
and **in that** the visible end of the tongue has, substantially in a plane above its notched inner end part, a complementary lip (10n) formed over all or part of its width and open to the top,
and **in that** this lip defines an internal cavity for receiving a tool such as a screwdriver, making it possible, by pivoting the screwdriver, to open the collar shape by releasing the free end of the tongue from the notched region of the base body.

2. Fastening and fixing device according to Claim 1, **characterized in that** the said base body (10a) has, at its top, on either side of the cradle region (10b), two horizontal parts (10c) that may constitute the impact part.

3. Fastening and fixing device according to Claim 1, **characterized in that** the notches are arranged over half the width of the said free end of the tongue and of the said side edge so as to obtain, in the same plane, a projecting region formed by the notch part and a free region,
and **in that** the notch regions arranged at the free end of the tongue and on the side edge of the base body are arranged in half parts, with an offset the thickness of one notch, thus making it possible to achieve a staggered positioning of the notch parts complementing a staggered positioning of the notch-free regions.

4. Fastening and fixing device according to Claim 1, **characterized in that** the base body has a lower plane (10p) which is rectangular or the like, whose width is substantially greater than the diameter of the underlying peg so as to constitute a bearing and stabilizing region for the fixing device, preventing the latter from rocking.

5. Fastening and fixing device according to Claim 3, **characterized in that** between the notches (10h) of the tongue or the notches (10j) of the base body is a groove (10q) or (10r) to strengthen the fixing.

6. Fastening and fixing device according to Claim 1, **characterized in that** the tongue (10f) has, where it joins the base body, a greater thickness (e) over a region (a), preventing any risk of breaking.

7. Hand tool for installing the fastening and fixing device according to any one of Claims 1 to 6, **characterized in that** it comprises a body (11) forming a handle, the lower end (11.1) of which has a region (11.2) that can straddle the base (10a) of the fastening device and centre itself under the cradle shape of the base to hold it in place, the said body being equipped with an opening (11.3) for the passage of the flexible tongue (10f), and **in that** the upper opposite end (11.4) of the tool has an impact area (11.5) and a bar (11.6) away from and perpendicular to the said sleeve, having at its end a claw (11.7) for fitting with and surrounding the lip (10n) formed on the outside of the tongue (10f) and for cooperating with the latter to close and open the fastening device.

8. Hand tool according to Claim 7, **characterized in that** the base part (11.8) of the claw (11.7) has, in the thickness of the bar (11.6), a thin transverse protuberance for positioning itself in the space made by the flexible tongue with respect to the base of the fastening device, the width between the claws (11.7) corresponding to the width of the tongue.

9. Hand tool according to Claim 7, **characterized in that** the lower part (11.1) has a fork shape engaging around the base of the fastening device by positioning itself over the abovementioned parts (10a1) thereof, and **in that** the base (11-12) of the fork has a curved shape complementary to that of the cradle for receiving the pipe.

10. Hand tool according to Claim 7, **characterized in that** it comprises a stiffening rib (11-10) on top of the bar (11.6) ending towards the impact area.

11. Hand tool according to Claim 7, **characterized in that** at the top it has a hook (11.11) for hanging and attaching it.

12. Hand tool according to Claim 9, **characterized in that** one of the visible faces of the lower end part has a vertical centring marker (11-13).
